# EUROPÄISCHE PATENTSCHRIFT

(11) **EP 1 283 123 B1**
(45) Veröffentlichungstag und Bekanntmachung des Hinweises auf die Patenterteilung: **26.04.2006**
(21) Anmeldenummer: 02015211.2
(22) Anmeldetag: 09.07.2002
(51) Int. Cl.: B60M 1/28

(54) **Verfahren zum Auswechseln eines Fahrdrahtes an einer Oberleitung**
Process for exchanging the contact wire of a catenary line
Procédé pour remplacer le fil de contact d'une ligne caténaire

(30) Priorität: 10.08.2001 DE 10138294
(43) Veröffentlichungstag der Anmeldung: 12.02.2003
(73) Patentinhaber: DB Netz Aktiengesellschaft, 60486 Frankfurt am Main (DE)
(72) Erfinder: Preis, Peter, 68723 Plankstadt (DE)
(74) Vertreter: Zinken-Sommer, Rainer

(56) Entgegenhaltungen:
- DE-A- 10 039 064
- JP-A- 6 144 220

## Beschreibung

Die Erfindung betrifft eine Vorrichtung zum Auswechseln eines mit Hängern an einem Tragseil an einer Oberleitung eines Gleises befestigten Fahrdrahtes, mit mindestens einer Einheit zur Führung und Aufnahme des abzubauenden Fahrdrahtes sowie mindestens einer dazu in Arbeitsrichtung achsensymmetrisch angeordneten Einheit zur Führung und Aufnahme des zu verlegenden Fahrdrahtes, die der Führungs- und Aufnahmeeinheit des abzubauenden Fahrdrahtes in Arbeitsrichtung vorausläuft.

Über Gleisanlagen von Eisenbahnen mit elektrischer Zugförderung befindet sich zum Zwecke der Stromversorgung eine Oberleitungsanlage. Die elektrisch betriebenen Triebfahrzeuge greifen dort über den Kontakt zwischen Stromabnehmer und Oberleitungsfahrdraht die von ihnen benötigte Energie ab. Der durch den mechanischen Kontakt und den Stromdurchfluß entstehende Verschleiß führt zu eine Minderung des Querschnittes des Fahrdrahtes und damit zu einer abnehmenden Zugfestigkeit des Fahrdrahtes. Bei Erreichen eines unteren Verschleißgrenzmaßes ist der alte Fahrdraht deshalb gegen einen neuen Fahrdraht auszutauschen.

In der Praxis sind Verfahren gängig, bei denen der neue Fahrdraht parallel zum alten Fahrdraht aufgehängt und danach auf die erforderliche endgültige Zugspannung gebracht wird. Anschließend wird der alte Fahrdraht aus den Klemmen gelöst und in Seitenhaltekarabiner gelegt. Sind alle Führungspunkte (also z.B. Hänger, E-Verbinder, Fixpunkte...) ummontiert, wird der alte Fahrdraht durch einen Trennschnitt von der Zugspannung entlastet, in den Gleisbereich abgeworfen und dort auf bei der Verschrottung handhabbare Stücklängen zerschnitten (beschrieben z.B. in "Eisenbahningenieur" 34 (1983), 2, S. 51ff). Seit einigen Jahren wird des ausgehängte alte Fahrdraht nicht mehr ins Gleis abgeworfen, sondern in einem separaten Arbeitsgang auf Holztrommeln aufgewickelt. Als nachteilig erweisen sich in bei den Fällen der durch die sequentielle Arbeitsweise bedingte hohe Bedarf an Betriebspausen zur Gleissperrung, die sich bei den heute üblichen hohen Gleisbelegungsdichten betrieblich oft nicht mehr realisieren lassen. Ebenso verursacht der geringe Mechanisierungs- und Automatisierungsgrad einen hohen Personalbedarf.

Aus verschiedenen Patentschriften sind Vorrichtungen bekannt, die die Mechanisierung des Oberleitungsbaus deutlich vorangebracht haben.

FR 2129 540 A 5 lehrt ein Verfahren bzw. eine Vorrichtung zum Auswechseln eines Fahrdrahtes, das eine (in Arbeitsrichtung gesehen) vordere Montagebühne zum Demontieren des alten Fahrdrahtes von den Hängern sowie eine hintere Montagebühne zum Montieren des neuen Fahrdrahtes an den Hängern vorsieht. Die Vorrichtung ermöglicht zwar ein zeitgleiches Aufspulen des alten Fahrdrahtes und Ziehen des neuen Fahrdrahtes in kontinuierlicher Weise, dennoch ist der personelle Aufwand zur Besetzung der Maschine mit Bedienpersonal noch sehr hoch.

In ähnlicher Weise offenbart DE 100 07 093 A1 eine schienengebundene Fahrieltungsinstandsetzungseinrichtung zum kontinuierlichen Verlegen und / oder Abnehmen des Fahrdrahtes einer Oberleitung. Für das Auswechseln eines Fahrdrahtes (also das gleichzeitige Abnehmen des alten Fahrdrahtes und Ziehen des neuen Fahrdrahtes in einem Maschinendurchgang) sind jedoch zwei separate Montagehubbühnen vorgesehen, wobei auf einer Hubbühne die Hänger demontiert werden und auf einer zweiten Hubbühne die neuen Hänger wieder montiert werden.

Der gravierende Nachteil dieser beiden bekannten Vorrichtungen ist insbesondere darin zu sehen, dass einerseits die Maschinen - durch ihre Konstruktion bedingt - einen im wesentlichen fixen Abstand der beiden Montagebühnen zueinander vorgeben. In der Praxis sind jedoch die Klemmpunkte des Fahrdrahtes (Hänger, Seitenhalter) nicht äguidistant über die Fahrdrahtlänge verteilt. Die Zwischenräume zwischen den Klemmpunkten variieren zwischen 2,5 m und 16 m, so dass in der Praxis die bei den Montagebühnen meistens nicht gleichzeitig produktiv sein können. So ist beispielsweise der Montage-Arbeitsplatz zur Untätigkeit gezwungen, wenn der Demontage-Arbeitsplatz wegen schwergängigem Demontieren des Klemmpunktes das Arbeitstempo der Maschine drosseln muss.

Aus EP 416 136 bzw. EP 459 537 bzw. EP 459 538 ist ein grundlegendes Maschinenkonzept zum kontinuierlichen Verlegen des Fahrdrahtes und/oder Tragseils einer Oberleitung bekannt. Dieses Fahrzeug ist jedoch in erster Linie für das gleichzeitige Spannen von Tragseil und Fahrdraht konzipiert, wie es bei größeren Fahrleitungs- um oder - neubauten notwendig wird. Für den weit häufiger auftretenden Fall, daß lediglich der abgenutzte Fahrdraht ausgetauscht werden soll, ist dieses Fahrzeug jedoch ungeeignet, da es lediglich entweder den Abbau des auszuwechselnden Drahtes oder den Aufbau des neuen Fahrdrahtes ermöglicht. Für den kompletten Fahrdrahttausch wären entweder zwei separate Arbeitsdurchgänge oder zwei im Verbund arbeitende Fahrzeuge notwendig, wobei im letzten Fall das zweite Fahrzeug in Bezug zur Arbeitsrichtung spiegelbildlich zum ersten Fahrzeug angeordnet sein muß. Generell ist das Fahrzeug nur für eine Arbeitsrichtung ausgelegt. Dies kann im praktischen Einsatz durchaus zeit und kostenintensive Wende- und Rangiermanöver oder aber zusätzliche logistische Maßnahmen bei der Baustellen-Organisation erforderlich machen. Zusätzlich benötigt die für die Aufbringung der Fahrdrahtzugspannung eingesetzte Friktionswinde wertvolle Arbeits- bzw. Einbaufläche auf dem Fahrzeug. Selbst bei Einschränkung auf das bloße Abbauen des auszuwechselnden Fahrdrahtes bleibt die Maschine konstruktionsbedingt auf einen Fahrdrahtzug beschränkt, wobei die Arbeitsrichtung durch die Maschine fest vorgegeben ist. Die empfindlichen Fahrdrähte werden durch das Windwerk unnötig stark gebogen bzw. gewalkt und aneinander gerieben. Schließlich sollen sich die Komponenten wie z.B. Umlenkrolle, Führungsrollen und Seiltrommeln selbst zentrieren. Dies kann jedoch nur angewendet werden, wenn der Fahrdraht und / oder das Tragseil mindestens eine Mastlänge vor bzw. hinter der Maschine nicht in den Fahrleitungsstützpunkten fixiert ist. Dies wiederum macht bei dem hier gewählten Ansatz stets ein in diesem Abstand vor- sowie ein entsprechendes nachlaufendes Fahrzeug mit Arbeitsbühne erforderlich. Da die Maschine die Höhenlage des Fahrdrahtes im Sinne einer Soll-Lage stets vorgibt, ist zum Montieren an den Klemmpunkten von Tragseil bzw. Fahrdraht immer eine manuelle Kraftaufwendung durch das Montagepersonal notwendig.

In EP 776 780 wird dieses Grundkonzept im wesentlichen dahingehend modifiziert, daß der dem Ansteuern der Höhen- bzw. Solllage des Fahrdrahtes bzw. des Tragseils dienende Auslegerarm durch eine höhenverstellbare und um eine in Maschinenlängsrichtung verlaufende horizontale Achse verschwenkbare Führungseinrichtung ersetzt wird. Dadurch wird zwar die bislang starr vorgegebene Arbeitsrichtung aufgehoben, die übrigen konzeptionell bedingten Nachteile der Maschine in Bezug auf das Auswechseln eines Fahrdrahtes bleiben jedoch bestehen.

In EP 861 752 ist eine ähnlich Maschine mit einem modifizierten Aufbau der Zugspannvorrichtung dargelegt. Die Notwendigkeit der Existenz einer solchen separaten Zugspannvorrichtung besteht jedoch weiterhin.

In EP 972 669 wird die bisherige mechanisch selbsttätige Ausrichtung der Führungs- und Umlenkrollen durch ein gezieltes Ansteuern dieser Komponenten mittels Antriebe aufgegeben. Die Maschine gibt jedoch weiterhin die Soll-Lage von Fahrdraht und / oder Tragseil durch die eingestellte Position von Umlenk- und Führungsrollen vor. Eine direkte Fixierung des Fahrdrahtes im näheren Umfeld der Maschine ist somit weiterhin nicht möglich. Auch die übrigen genannten Nachteile dieses Maschinenkonzeptes bestehen weiterhin.

EP 706 910 beschreibt eine Vorrichtung mit einerstehend gelagerten Drahttrommel (d.h. deren Trommelachse verläuft vertikal), die jedoch ansonsten analog zu dem aus EP 416 136 bekannten Grundprinzip arbeitet.

Aus DE 100 39 064 ist ein Verfahren zum Fahrdrahtwechsel bekannt, bei welchem der auszuwechselnde Fahrdraht zunächst im Arbeitsbereich von der Gewichtskraft entlastet wird; die im Fahrdraht herrschende Zugspannung bleibt jedoch erhalten. Dadurch wird ein Abschlaffen bzw. Durchhängen des Fahrdrahtes und ein dadurch bedingtes Auswandern des Klemmpunktes zwischen Fahrdraht und Hänger aus seiner Soll-Position vermieden. Das Auf- bzw. Abwickeln der Fahrdrähte erfolgt simultan und maschinell während der Arbeitsvorfahrt zwischen zwei Hängerklemmen. Beim Erreichen der in Arbeitsrichtung nächstgelegenen Hängerklemme können die Montagearbeiten nun in derselben räumlichen Arbeitsebene zeitlich unmittelbar hintereinander ausgeführt werden, wobei die wenigen verbleibenden manuellen Tätigkeiten durch einen einzigen Monteur ausgeführt werden können. Dabei müssen lediglich der Klemmpunkt vom alten Fahrdraht gelöst und unmittelbar auf den parallel liegenden neuen Fahrdraht geklemmt werden. Ebenso ist jederzeit ein qualifiziertes Beenden der Arbeiten möglich, z.B. wenn für das Arbeitsgleis das zeitliche Ende einer betrieblichen Sperrung erreicht ist. Beide Fahrdrähte werden in einer Arbeitsebene geschnitten und gestossen; es entsteht kein weiterer Rangieraufwand.

Der Erfindung liegt die Aufgabe zugrunde, eine zur Durchführung eines derartigen aus DE 100 39 064 bekannten Verfahrens geeignete Vorrichtung bereitzustellen, welche zur Erfüllung der sich aus der Komplexität des Abwickel- bzw. Aufspulvorganges ergebenden Randbedingungen geeignet ist.
Diese Aufgabe wird in Verbindung mit dem Oberbegriff des Patentanspruches 1 erfindungsgemäß dadurch gelöst, dass jeweils mindestens eine Fahrdrahtführungseinrichtung (12) mit einem zugeordneten Fahrdrahtlageprüfer (27) die Fahrdraht-Ist-Lage erfasst sowie den alten Fahrdraht aus seiner Ist-Lage auf die Speichertrommel überführt bzw. den neuen Fahrdraht von der Speichertrommel in eine mit der Ist-Lage des alten Fahrdrahtes identische Endlage überführt, wobei der in Arbeitsrichtung vorauslaufende Fahrdrahtlageprüfer (27 A) die Ist-Lage des einlaufenden Fahrdrahtes messtechnisch erfasst und eine zentrale Steuereinheit (7) daraus Steuersignale für ein synchrones Nachführen der in Arbeitsrichtung vorauslaufenden und mit diesem Fahrdrahtlageprüfer (27 A) verbundenen Fahrdrahtführungseinrichtung (12 A) in allen drei Raumkoordinaten ermittelt sowie eine Messvorrichtung an einer unteren Umlenkrolle (31) der Fahrdrahtführungseinrichtung (12) die aktuelle Ablenkung des von der Speichertrommel (14) ablaufenden bzw. auf die Speichertrommel auflaufenden Fahrdrahtes von der rechtwinklig zur Speichertrommelachse (15) verlaufenden Richtung erfasst und die zentrale Steuerungseinrichtung (7) daraus Signale zu einer Verschiebung des Trommelwindenbocks (13) quer zur Gleisachse (5) ermittelt.

Die erfindungsgemäße Vorrichtung besteht gattungsgemäss aus getrennten Führungs- und Aufnahmevorrichtungen für den einlaufenden alten Fahrdraht und den ablaufenden neuen Fahrdraht. Dadurch können beide Fahrdrähte synchron gespult werden was eine zeitgleiche Demontage und Montage ermöglicht. Durch die Anordnung der in Arbeitsrichtung vorauslaufenden Einrichtungen für den zu verlegenden neuen Fahrdraht vor den in Arbeitsrichtung nachlaufenden Einrichtungen für den abzubauenden Fahrdraht kreuzen sich die ein- und auslaufenden Drähte in einer einzigen Arbeitsebene, in der die notwendigen Montagevorgänge ablaufen.
Die erfindungsgemässe Vorrichtung beschreibt in vorteilhafter Weise die Ausrichtung der Fahrdrahtführungseinrichtungen der Maschine an die vorgefundene Ist-Lage des alten Fahrdrahtes, an der sich auch der unmittelbar darauffolgende Verlegevorgang orientiert. Es ist von besonderem Vorteil, die Ist-Lage des alten Fahrdrahtes - insbesondere die Fahrdraht-Seitenlage - nicht wesentlich zu verändern und den neuen Fahrdraht wieder entsprechend dieser Ist-Lage zu verlegen. Für das Montagepersonal entfällt jegliche manuelle Kraftaufwendung im Zusammenhang mit einer Lageveränderung der Fahrdrähte oder einer Zugentlastung von Seilhängem. Der Fahrdraht und ebenso das mit diesem verbundene Tragwerk verbleiben im Arbeitsbereich der Maschine in ihrer Ist-Lage. Auf die Oberleitung können keine Kräfte einwirken, die eine Gefahr von Beschädigung mit sich bringen könnten. Ebenso werden für das Montagepersonal größere manuelle Kraftaufwendungen vermieden. Die fehlende Notwendigkeit manueller Nachführungen reduziert des weiteren die Gefahr von Bedienfehlern. Des weiteren stellt die Messung der Verkantung der unteren Umlenkrolle für die Steuerung des Wickel- bzw. Spulvorgangs eine vorteilhafte Alternative zu den bekannten Laser-Triangulations-Verfahren zur berührungslosen Messung der Wickeldicke und der Position des von der Speichertrommel ab- bzw. auf diese auflaufenden Fahrdrahtes dar. Mit dem gleichen Meßprinzip kann gleichzeitig auch die Nenn-Zugspannung in dem über diese Umlenkrolle laufenden Fahrdraht gemessen werden - gegebenenfalls auch als Rückfall-Ebene, wenn diese Messung bereits an der oberen Umlenkrolle erfolgt.

Eine vorteilhafte Ausbildung der erfindungsgemäßen Vorrichtung besteht darin, die Führungs- und Aufnahmeeinheiten für den neuen und alten Fahrdraht auf separaten Grundrahmen aufzubauen, die vom Trägerfahrzeug unabhängig sind. Somit wird erreicht, dass diese Module nicht unlösbar mit einem fest vorgegebenen Trägerfahrzeug verbunden, sondern freizügig einsetzbar sind. Die Verwendung straßenfahrbarer Trägerfahrzeuge oder von Zweiwege-Fahrzeugen ermöglicht die Anwendung des erfindungsgemäßen Verfahrens somit auch im Bereich von Straßenbahnen oder Oberleitungsbussen. Ebenso ist ein Straßentransport der Vorrichtung zu Einsatzorten an Gleisanlagen denkbar und vereinfacht damit die Baustellen-Logistik.

Erfindungsgemäß wird weiter vorgeschlagen, alle Aufnahmeeinheiten mit Antriebs- und Bremsvorrichtungen an den Trommelaufnahmen auszustatten. Dadurch wird es möglich, die erfindungsgemäße Vorrichtung richtungsunabhängig zu betreiben und die Trommelaufnahmen bedarfsorientiert sowohl für Aufwickel- als auch für Abwickelvorgänge unter Nennzuglast einzusetzen. Die Bremse stellt eine zusätzliche Sicherung bei Unregelmässigkeiten dar.

Ein wesentlicher Aspekt des erfinderischen Gedankens besteht darin, die Nenn-Zugspannung messtechnisch zu erfassen und als Grundlage für die Ansteuerung aller Antriebe durch eine zentrale Steuerungseinheit zu verwenden. Dadurch wird das Montagepersonal in hohem Umfang von manuellen Tätigkeiten entlastet und ein beim Fahrdrahtwechsel wesentlicher Qualitätsfaktor der Überwachung zugänglich gemacht sowie eine im Sinne des Qualitätsmanagements notwendige Protokollierung der Arbeitsergebnisse ermöglicht.

Es ist besonders vorteilhaft, den Fahrdrahtlageprüfer und die obere Umlenkrolle, die gemeinsam einer Fahrdrahtführungseinrichtung zugeordnet sind, mit einem Versatz längs der Drehachse dieser Umlenkrolle anzuordnen. Dies bewirkt, dass alter und neuer Fahrdraht nahe beieinander, jedoch mit definiertem Abstand zueinander geführt werden, so dass Verdickungen im Fahrdrahtquerschnitt (z.B. eingebaute Stromverbinder oder andere Klemmen) nicht zur Berührung bzw. Kollision zwischen altem und neuem Fahrdraht führen können. Wird dieser Versatz an bei den Fahrdrahtführungseinrichtungen gleich groß, jedoch spiegelbildlich zueinander ausgeführt, verlaufen beide Fahrdrähte parallel zueinander und die Klemmpunkte am alten und neuen Fahrdraht liegen einander genau gegenüber.

Eine Modifikation des Erfindungsgedankens sieht vor, die Speichertrommeln mit einem leicht kegelstumpfförmigen Kern auszustatten. In Verbindung mit dem in Anspruch 13 angesprochenen Merkmal ermöglicht dies eine leichtere Behandlung des aufgewickelten Fahrdrahtes bei der Zuführung zum Recycling. Anstelle eines aufwendigen erneuten Abspulens ist es ausreichend, den Fahrdraht nach Abnehmen der Seitenwandung der Speichertrommel vom leicht konisch geformten Trommelkem abzustreifen.

Eine zweckmäßige Ausgestaltung des Erfindungsgedankens sieht ferner die Möglichkeit zur Relativbewegung zwischen Fahrdrahtführungseinrichtung und Trommelwindenbock vor. Dadurch wird beim Abwickelvorgang sichergestellt, dass es zu keinen Verdrehungen, Knicken oder Abscheuerungen am neuen Fahrdraht kommt. Beim Aufwickeln des alten Fahrdrahtes werden dadurch Unregelmäßigkeiten, wie z.B. Knäuelbildungen, verhindert und somit die Ausnutzung der vollen Trommelkapazität unterstützt.

Die Zuordnung von Hilfs-Seilwinden zu den Trommelwindenböcken stellt eine sinnvolle Ergänzung der Erfindung dar, da sie den Einfädelvorgang der auf- und abzuwickeinden Fahrdrähte zu Beginn einer Arbeitsschicht sinnvoll erleichtern.

Ebenso ist es sinnvoll, eine höhenverstellbare Arbeitsbühne im Bereich der durch das erfindungsgemäße Verfahren vorgegebenen Arbeitsebene zu installieren.

Eine mobile Steuerungseinrichtung - z.B. im Arbeitsbereich des Monteurs - ergänzt die erfindungsgemäße Vorrichtung dahingehend, dass - neben der üblichen Grundforderung nach Redundanz - für den Monteur eine Möglichkeit zum manuellen Eingriff in die zentrale Maschinensteuerung im Falle von Besonderheiten an der Oberleitung bzw. zur Gefahrenabwehr geschaffen wird.

Eine automatische Erkennung der Hängerklemmen stellt schließlich eine sinnvolle Ergänzung dar, da dadurch die Grundlage geschaffen wird, die Positionierung der erfindungsgemäßen Vorrichtung nach erfolgter Arbeitsvorfahrt zwischen zwei Hängerklemmen zu automatisieren.

Abschließend kann es von Vorteil sein, wenn die Fahrdrahtführungseinrichtung außerhalb des Arbeitseinsatzes zur Erleichterung des Transportes abklappbar bzw. demontierbar ausgeführt ist. Durch zusätzliche Stützvorrichtungen kann eine Stapelfähigkeit der Vorrichtung erreicht werden, wodurch Transport und Lagerung vereinfacht werden.

Der Erfindungsgedanke wird im folgenden anhand eines in der Zeichnung dargestellten Ausführungsbeispiels näher erläutert.

Es zeigen:
- Figur 1: eine Seitenansicht eines erfindungsgemäß ausgebildeten Fahrzeuges zum Auswechseln eines Fahrdrahtes an einer Oberleitung,
- Figur 2: eine Draufsicht eines erfindungsgemäß ausgebildeten Fahrzeuges zum Auswechseln eines Fahrdrahtes an einer Oberleitung,

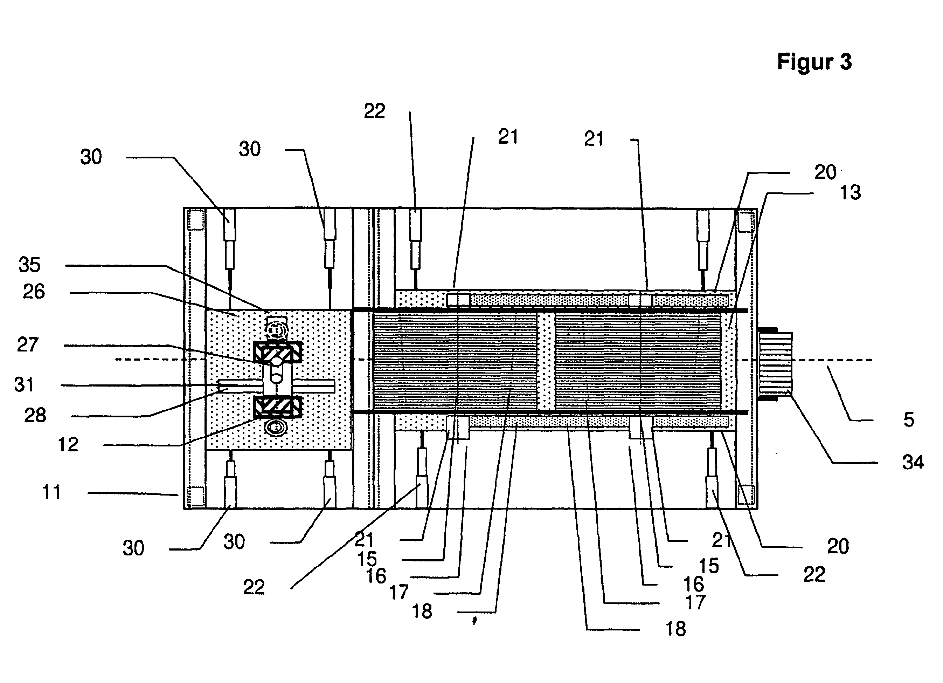

- Figur 3: eine Detailansicht zur Führung und Aufnahme des Fahrdrahtes in Seitenansicht,

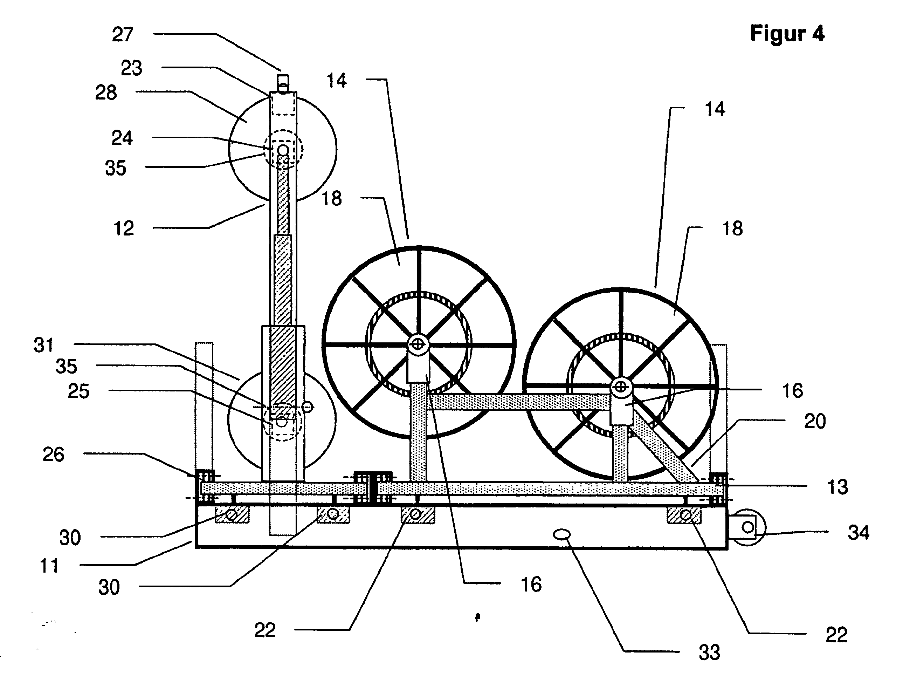

- Figur 4: eine Detailansicht zur Führung und Aufnahme des Fahrdrahtes als Draufsicht.

Die dargestellte Maschine besteht neben dem auf Schienenlaufwerken gelagerten Trägerfahrzeug (4) und den fakultativ an den bei den Stirnenden des Fahrzeuges vorsehbaren Kabinen für Führerstände, Werkzeug, Sanitäreinrichtungen etc. aus den Führungs- und Aufnahmeeinheiten für den zu verlegenden neuen Fahrdraht (Telleinheit A), einer Hubvorrichtung mit Arbeitsbühne (6) sowie den Führungs- und Aufnahmeeinheiten für den zu abzubauenden alten Fahrdraht (Teileinheit B). Bezogen auf die Arbeitsrichtung (1) läuft die Teileinheit Ader Arbeitsbühne (6) voraus, die Teileinheit B läuft dieser nach. Beide Teileinheiten sind auf jeweils einem Wechselbrückenrahmen (11) montiert, wobei die durch das Trägerfahrzeug vorgegebenen zulässigen Abmessungen berücksichtigt werden müssen.

Jede Teileinheit (A, B) besteht aus einer höhenverstellbaren und quer zur Gleisachse (5) verschiebbaren Fahrdrahtführungseinrichtung (12) mit Kraftaufnehmem (23, 24, 25) zur Messung der Fahrdrahtzugspannung. Der Antrieb (30) zum seitlichen Verschieben des Grundrahmens (26) ist im Wechselbrückenrahmen (11) integriert und wird automatisch durch die zentrale Steuerung (7) angesteuert. Am oberen Ende der Fahrdrahtführungseinheit (12) befindet sich ein Führungsrollen enthaltender Fahrdrahtlageprüfer (27), dessen Führungsrollenachsen in etwa ein nach oben offenes U beschreiben. In den Lagerblöcken der Führungsrollen sind Kraftmesser (23) zur Detektion der Seiten- und Höhenlage des durchlaufenden Fahrdrahtes integriert. Unmittelbar unterhalb des Fahrdrahtlageprüfers (27) und mit leichtem achsparallelen Versatz hierzu befindet sich eine obere Umlenkrolle (28), deren Durchmesser durch den minimalen Biegeradius des Fahrdrahtes bestimmt wird. In den Lagerblöcken der Umlenkrolle (28) ist ein Kraftmesser (24) zur Ermittlung der Fahrdrahtzugspannung integriert. Das Laufflächenprofil der Umlenkrolle ist ausreichend breit zur Aufnahme eines Fahrdrahtes und zentriert den Fahrdraht in der Laufflächenmitte. In analoger Weise befindet sich in unteren Bereich der Fahrdrahtführungseinrichtung (12) die untere Umlenkrolle (31), die ebenfalls Kraftmesser (25) zur Gewährleistung eines korrekten Auf- bzw. Abspulvorganges aufweist. Seide Umlenkrollen (28, 31) verfügen über einen zusätzlichen Antrieb (35) zur Unterstützung der Trommelwindenantriebe und Bremssysteme (16).

Jede Teileinheit (A, S) verfügt ferner über einen quer zur Gleisachse (5) verschiebbaren Trommelwindenbock (20), der zur Aufnahe von zwei in Arbeitsrichtung hintereinander liegenden, im rechten Winkel zur Gleisachse (5) rotierenden Fahrdrahtspeichertrommein (14) mit entsprechenden Aufnahmevorrichtungen (21) ausgestattet ist. Jeder Speichertrommelaufnahme (21) ist ein in der Drehrichtung frei wählbarer Trommelwindenantrieb mit Bremssystem (16) zum Auf- bzw. Abwickeln des Fahrdrahtes unter Aufbringung der vorgesehenen Nenn-Zugspannung zugeordnet. Eine zweite Speichertrommel ist aus Gründen der Platzersparnis in versetzter Höhenlage zur ersten Speichertrommel angeordnet. Der Antrieb (22) zum Verschieben des Grundrahmens (13) des Trommelwindenbockes (20) ist im Wechselbrückenrahmen (11) integriert und wird automatisch durch die zentrale Steuerung (7) angesteuert.

Eine Schnittstelle (33) stellt die Verbindung zu einer zentralen rechnergestützten Steuereinheit (7) her. Über sie laufen die Daten von den Kraftmessern (23, 24, 25) sowie die Regelimpulse an die einzelnen Komponenten (13, 16,26) der bei den Teileinheiten A und S.

Eine Speichertrommel (14) besteht aus einem leicht kegelstumpfförmigen Kern (17), dessen geometrische Achse identisch mit der Speichertrommelachse (15) ist; jedoch darf dessen Außenradius nicht den kleinsten zulässigen Biegeradius des Fahrdrahtes unterschreiten. Die Seitenwandungen (19) der Speichertrommeln sind lösbar mit dem Kegelstumpf verbunden, wobei der Mittelpunkt der Seitenwandung mit der Speichertrommelachse (15) deckungsleich ist. Die Stabilität und Verwindungssteifigkeit der Speichertrommel muss die Übertragung der vorgeschriebenen Zugspannung auf den Fahrdraht ermöglichen.

Vor Arbeitsbeginn wird das Fahrzeug in Abhängigkeit von der geplanten Arbeitsrichtung (1) mit Speichertrommeln bestückt, wobei Teileinheit B mindestens eine leere Speichertrommel zur Aufnahme des Altdrahtes aufweisen muss, und so positioniert, daß sich die Arbeitsbühne (6) unter der ersten Hängerklemme (8) der auszuwechselnden Fahrdrahtlänge befindet. Das Seil der Hilfs-Seilwinde (34 B) der Teileinheit B wird von unten nach oben über die Umlenkrollen (31 B, 28 B) der Fahrdrahtführungseinrichtung (12 B) zur Fahrdrahtführungseinrichtung (12 A) der Teileinheit A und dort weiter von oben nach unten über die Umlenkrollen (28 A, 31 A) zur vollen Speichertrommel (14 A) gezogen. Das Winden seil wird dort mit dem neuen Fahrdraht verbunden und durch Betätigen der Hilfs-Seilwinde (34 B) zusammen mit dem Fahrdraht (3) von der Speichertrommel (14 A) über die Umlenkrollen (31 A, 28 A) bis zum Erreichen des ersten Klemmpunktes in der Oberleitung (8) gezogen. Ebenso wird ein zweites Hilfsseil, dessen eine Ende fest am verjüngten Ende des Kerns (17 B) der leeren Speichertrommel (14 B) fixiert ist, über die Umlenkrollen (31 B, 28 B) zum Klemmpunkt (8) geführt. Der abgenutzte Fahrdraht (2) wird nun mit diesem zweiten Hilfsseil verbunden. Alter (2) und neuer (3) Fahrdraht werden mittels der Trommelwindenantriebe (16 A, 16 B) mit der vorgesehenen Fahrdrahtzugspannung beaufschlagt; anschließend wird der alte Fahrdraht (2) aus der Klemme (8) gelöst und der neue Fahrdraht (3) eingeklemmt. Bevor sich das Fahrzeug in Arbeitsrichtung (1) in Bewegung setzt, wird die Fahrdrahtführungseinrichtung (12 A, 12 B) so positioniert, daß der abzubauende Fahrdraht (2) im Fahrdrahtlageprüfer (27 A) liegt. Analog muß der neu zu verlegende Fahrdraht (3) in den Fahrdrahtlageprüfer (27 B) eingeführt werden.

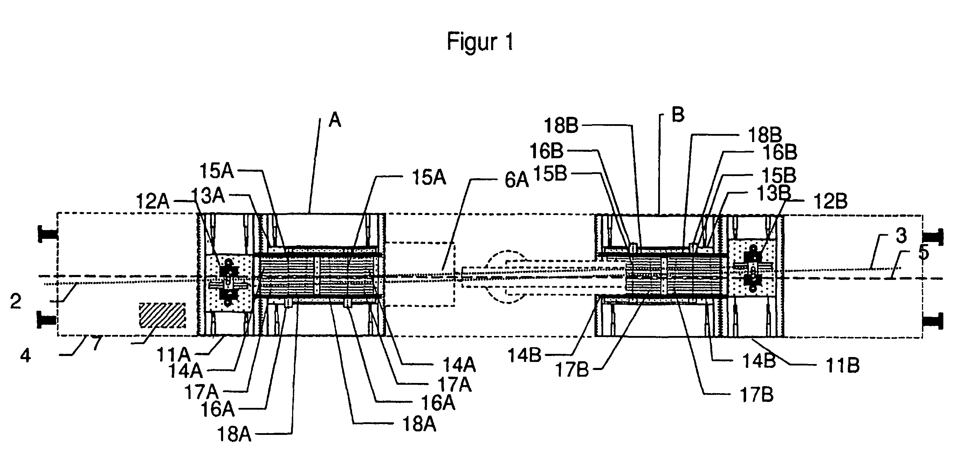

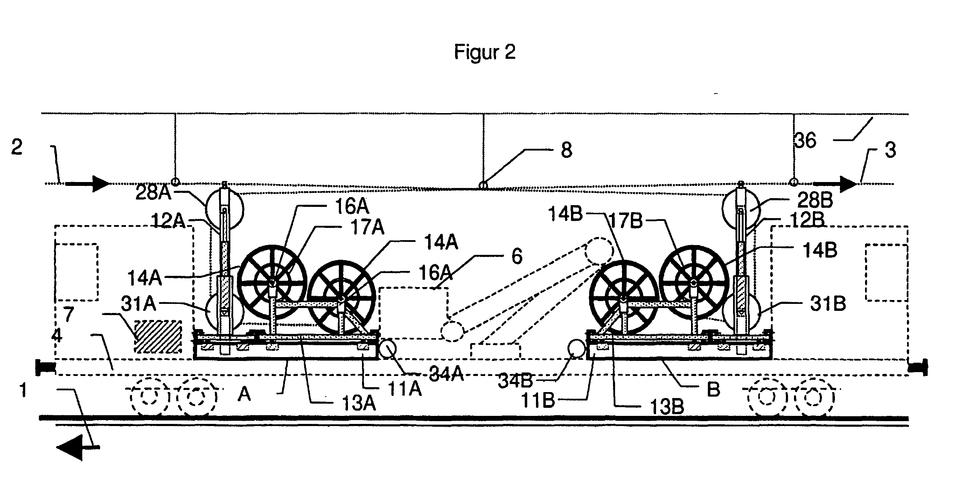

Während des Arbeitsprozesses wird die vorgeschriebene Fahrdraht-Zugspannung von Kraftmessern (24), die an den Lagerblöcken der oberen Führungsrollen (28) der Fahrdrahtführungseinrichtung (12) beider Teileinheiten A und B angebracht sind, permanent gemessen und an die rechnergestützte Steuereinheit (7) weitergeleitet. Diese Steuereinheit (7) regelt das Drehmoment, das die Trommelwindenantriebe und Bremssysteme (16) zur Beaufschlagung des Fahrdrahtes mit der vorgesehenen Zugspannung aufbringen müssen. Der abgenutzte Fahrdraht läuft bei Arbeitsvorfahrt des Fahrzeuges in Arbeitsrichtung (1) durch den Fahrdrahtlageprüfer (27 A), wobei die Kraftmesser (23 A) die auf den Fahrdrahtlageprüfer (27 A) einwirkenden Kräfte ermitteln. Die in vertikaler Richtung nach unten wirkende Kraft muß dabei stets größer null sein, damit eine Fahrdrahtführung jederzeit sichergestellt ist, ein übermäßiger Anhub des Fahrdrahtes muß jedoch vermieden werden. Wird in horizontaler Ebene eine Krafteinwirkung gemessen, so wird die Stellung der Fahrdrahtführungseinrichtung (12 A) durch Verschieben des Grundrahmens (26 A) derart nachgeführt, dass die Horinzontalkräfte neutralisiert sind und somit die Position des Fahrdrahtlageprüfers (27 A) mit der tatsächlichen Fahrdrahtseitenlage übereinstimmt. Diese Kraftmessung wird am Fahrdrahtlageprüfer (27 B) der nachlaufenden Fahrdrahtführungseinrichtung (12 B) nicht durchgeführt, da die Fahrdrahtführungseinrichtung (12 B) unter Berücksichtigung des Wegversatzes zwischen den bei den Führungseinrichtungen (12 A, 12 B) mit der Fahrdrahtseitenlage, die zuvor die vorauslaufende Führungseinrichtung (12 A) an diesem Ort eingenommen hatte, als Vorgabe angesteuert wird. Diese Steuerung gewährleistet einen bezüglich einer horizontalen Referenzebene parallelen Verlauf der bei den Fahrdrähte (2, 3) (siehe Figur 2). Der Abstand beider paralleler Fahrdrähte wird dabei bestimmt durch die Größe des Versatzes, den der Fahrdrahtlageprüfer (27) und die obere Umlenkrolle (28) längs der Drehachse der oberen Umlenkrolle (28) zueinander jeweils aufweisen und der bei beiden Teileinheiten A und B sinnvollerweise identisch ist. Der Abstand sollte so bemessen sein, dass im alten Fahrdraht vorhandene Bauteile wie z.B. Stromverbinder und sonstige Klemmen zu keiner Berührung mit dem neuen Fahrdraht führen. Bezüglich einer vertikalen, gleisparallelen Ebene kreuzen sich beide Fahrdrähte unter einem spitzen Winkel (siehe Figur 1).

In diesen Kreuzungsbereich einlaufende Klemmpunkte (8) werden bei Fahrzeugstillstand durch gleichmäßiges Anheben der Fahrdrähte (2, 3) mittels der höhenverstellbaren Fahrdrahtführungseinrichtungen (12 A, 12 B) von vertikalen Kräften entlastet. Anschließend kann der alte Fahrdraht (2) durch den auf der Arbeitsbühne (6) befindlichen Monteur aus dem Klemmpunkt (8) gelöst und der neue Fahrdraht (3) eingeklemmt werden. Nach Beendigung des Umklemmvorgangs werden die Führungsböcke (12 A, 12 B) wieder in ihre Ausgangslage abgesenkt und die Arbeitsvorfahrt zum nächsten Klemmpunkt wird gestartet. Durch eine vorgeschaltete automatische Lokalisierung der Klemmpunkte (z.B. ein im Bereich der vorauslaufenden Fahrdrahtführungseinrichtung [12 A] installiertes Bildverarbeitungssystem) kann auch der Prozeß der Arbeitsvorfahrt mit punktgenauem Positionieren der Arbeitsbühne (6) unter dem Klemmpunkt (8) automatisiert werden.

Durch das Verschieben der Fahrdrahtführungseinrichtungen (12) quer zur Gleisachse (5) und der sich während der Wickelvorgänge fortlaufend ändern- den Position des ab- bzw. aufzuwickelnden Fahrdrahtes entlang der Längsachse der Speichertrommel (15) wird ein Nachsteuem des Grundrahmens (13) notwendig, damit ein rechtwinkliges, verwindungsfreies Auf- bzw. Ablaufen des Fahrdrahtes auf bzw. von der Speichertrommel gewährleistet ist. Hierzu werden die Kräfte, die durch seitlichen Versatz in horizontaler Ebene entstehen, mit den Kraftmessern (25) an den unteren Umlenkrollen (31) der Fahrdrahtführungseinrichtung (12) permanent gemessen und an die Steuereinheit (7) weitergeleitet. Wird eine Kraft in horizontaler Ebene registriert, wird der Grundrahmen (13) mit der Speichertrommel (14) quer zur Gleisachse (5) verschoben bis die Neutralisierung dieser Kraft erreicht und damit ein rechtwinkliges Auf- bzw. Ablaufen des Fahrdrahtes auf bzw. von der Speichertrommel gewährleistet ist.

### Bezugszeichenliste

- A, B: Charakterisieren die Zugehörigkeit zu einer der beiden Teileinheiten A, B_
- A: in Arbeitsrichtung vorauslaufende Teileinheit
- B: in Arbeitsrichtung nachlaufende Teileinheit

- 1: Arbeitsrichtung
- 2: Abzubauender Fahrdraht
- 3: Neu zu verlegender Fahrdraht
- 4: Trägerfahrzeug
- 5: Gleisachse
- 6: Arbeitsbühne
- 7: Zentrale rechnergestützte Steuereinheit
- 8: Klemmpunkt zwischen Hänger und Oberleitung
- 11: Wechselbrückenrahmen
- 12: Fahrdrahtführungsrahmen
- 13: Grundrahmen des Trommelwindenblockes (20)
- 14: Speichertrommel
- 15: Längsachse der Speichertrommel (14)
- 16: Trommelwindenantrieb mit Bremssystem
- 17: Kern der Speichertrommel
- 20: Trommelwindenbock
- 21: Aufnahmevorrichtung für Speichertrommel (14)
- 22: Antrieb für Grundrahmen des Trommelwindenbockes
- 23: Kraftmesser
- 24: Kraftmesser
- 25: Kraftmesser
- 26: Grundrahmen für Fahrdrahtführungseinrichtung
- 27: Fahrdrahtlageprüfer
- 28: Obere Umlenkrolle
- 30: Antrieb für Grundrahmen der Fahrdrahtführungseinrichtung
- 31: untere Umlenkrolle
- 33: Schnittstelle zur zentralen rechnergestützten Steuereinheit
- 34: Hilfs-Seilwinde
- 35: Antrieb für Umlenkrollen

## Patentansprüche

1. Vorrichtung zum Auswechseln eines mit Hangern an einem Tragseil an einer Oberleitung eines Gleises befestigten Fahrdrahtes, mit mindestens einer Einheit zur Führung und Aufnahme des abzubauenden Fahrdrahtes sowie mindestens einer dazu in Arbeitsrichtung achsensymmetrisch angeordneten Einheit zur Führung und Aufnahme des zu verlegenden Fahrdrahtes, die der Führungs- und Aufnahmeeinheit des abzubauenden Fahrdrahtes in Arbeitsrichtung vorausläuft,
**dadurch gekennzeichnet, dass**
jeweils mindestens eine Fahrdrahtführungseinrichtung (12) mit einem zugeordneten Fahrdrahtlageprüfer (27) die Fahrdraht-Ist-Lage erfasst sowie den alten Fahrdraht aus seiner Ist-Lage auf die Speichertrommel überführt bzw. den neuen Fahrdraht von der Speichertrommel in eine mit der Ist-Lage des alten Fahrdrahtes identische Endlage überführt,
wobei der in Arbeitsrichtung vorauslaufende Fahrdrahtlageprüfer (27 A) die Ist-Lage des einlaufenden Fahrdrahtes messtechnisch erfasst und eine zentrale Steuereinheit (7) daraus Steuersignale für ein synchrones Nachführen der in Arbeitsrichtung vorauslaufenden und mit diesem Fahrdrahtlageprüfer (27 A) verbundenen Fahrdrahtführungseinrichtung (12 A) in allen drei Raumkoordinaten ermittelt
sowie eine Messvorrichtung an einer unteren Umlenkrolle (31) der Fahrdrahtführungseinrichtung (12) die aktuelle Ablenkung des von der Speichertrommel (14) ablaufenden bzw. auf die Speichertrommel auflaufenden Fahrdrahtes von der rechtwinklig zur Speichertrommelachse (15) verlaufenden Richtung erfasst und die zentrale Steuerungseinrichtung (7) daraus Signale zu einer Verschiebung des Trommelwindenbocks (13) quer zur Gleisachse (5) ermittelt

2. Vorrichtung zum Auswechseln eines Fahrdrahtes an einer Oberleitung nach Anspruch 1, **dadurch gekennzeichnet, dass** beide Einheiten zur Führung und Aufnahme des abzubauenden bzw. des zu verlegenden Fahrdrahtes auf jeweils separaten, vom Trägerfahrzeug lösbaren Grundrahmen (11) aufgebaut sind.

3. Vorrichtung zum Auswechseln eines Fahrdrahtes an einer Oberleitung nach mindestens einem der Ansprüche 1 oder 2, **dadurch gekennzeichnet, dass** jede Einheit mindestens eine Speichertrommelaufnahme mit jeweils separatem Trommelwindenantrieb und -bremse (16) aufweist.

4. Vorrichtung zum Auswechseln eines Fahrdrahtes an einer Oberleitung nach mindestens einem der Ansprüche 1 bis 3, **dadurch gekennzeichnet, dass** eine Messvorrichtung an den unteren und/oder oberen Umlenkrollen (28, 31) die aktuelle Zugspannung des ein- bzw. auslaufenden Fahrdrahtes erfasst und die Messwerte zur Steuerung der zugehörigen Trommelantriebe bzw. -bremsen (16) an eine zentrale Steuereinrichtung (7) übergibt.

5. Vorrichtung zum Auswechseln eines Fahrdrahtes an einer Oberleitung nach mindestens einem der Ansprüche 1 bis 4, **dadurch gekennzeichnet, dass** die zentrale Steuereinheit (7) die mit dem in Arbeitsrichtung nachlaufenden Fahrdrahtlageprüfer (27 B) verbundene Fahrdrahtführungseinrichtung (12 B) in allen drei Raumkoordinaten derart ansteuert, dass seine Position identisch mit der zuvor vom vorlaufenden Führungselement an diesem Ort eingenommenen Position ist.

6. Vorrichtung zum Auswechseln eines Fahrdrahtes an einer Oberleitung nach mindestens einem der Ansprüche 1 bis 5, **dadurch gekennzeichnet, dass** der Fahrdrahtlageprüfer (27) und die obere Umlenkrolle (28) einen Versatz längs der Drehachse der oberen Umlenkrolle (28) zueinander aufweisen.

7. Vorrichtung zum Auswechseln eines Fahrdrahtes an einer Oberleitung nach mindestens einem der Ansprüche 1 bis 6, **dadurch gekennzeichnet, dass** die Speichertrommeln (14) einen leicht kegelstumpfförmigen Kern aufweisen.

8. Vorrichtung zum Auswechseln eines Fahrdrahtes an einer Oberleitung nach mindestens einem der Ansprüche 1 bis 7, **dadurch gekennzeichnet, dass** die Speichertrommeln (14) Seitenwandungen (18) aufweisen, die lösbar mit dem Speichertrommelkern verbunden sind.

9. Vorrichtung zum Auswechseln eines Fahrdrahtes an einer Oberleitung nach mindestens einem der Ansprüche 1 bis 8, **dadurch gekennzeichnet, dass** Fahrdrahtführungseinrichtung (12) und Trommelwindenbock (13) mechanisch voneinander getrennt sind und relativ zueinander in einer horizontalen Ebene quer zur Arbeitsrichtung der Vorrichtung verschiebbar sind.

10. Vorrichtung zum Auswechseln eines Fahrdrahtes an einer Oberleitung nach mindestens einem der Ansprüche 1 bis 9, **dadurch gekennzeichnet, dass** den Trommelwindenböcken (13) jeweils eine angetriebene Hilfs-Seilwinde (34) zugeordnet ist.

11. Vorrichtung zum Auswechseln eines Fahrdrahtes an einer Oberleitung nach mindestens einem der Ansprüche 1 bis 10, **dadurch gekennzeichnet, dass** ein höhenverstellbares Arbeitsgerüst (6) zum Aus- bzw. Einklemmen der Fahrdrähte in die Hängerklemmen derart angeordnet ist, dass dessen Arbeitsplattform in Arbeitsstellung in Bezug auf die Arbeitsrichtung mittig zwischen den beiden Fahrdrahtführungseinrichtungen (12) angeordnet ist.

12. Vorrichtung zum Auswechseln eines Fahrdrahtes an einer Oberleitung nach Anspruch 11, **dadurch gekennzeichnet, dass** sämtliche Antriebe des Arbeitsgerüstes (6) über eine mobile Steuereinrichtung steuerbar sind.

13. Vorrichtung zum Auswechseln eines Fahrdrahtes an einer Oberleitung nach mindestens einem der Ansprüche 1 bis 12, **dadurch gekennzeichnet, dass** in deren in Arbeitsrichtung vorlaufenden Bereich jeweils eine Vorrichtung zur Erkennung der Klemmpunkte installiert ist.

14. Vorrichtung zum Auswechseln eines Fahrdrahtes an einer Oberleitung nach mindestens einem der Ansprüche 1 bis 13, **dadurch gekennzeichnet, dass** außerhalb des Arbeitseinsatzes die Fahrdrahtführungseinrichtung (12) über eine quer zur Maschinenlängsachse liegende Rotationsachse auf der Vorrichtung abzulegen ist.

15. Vorrichtung zum Auswechseln eines Fahrdrahtes an einer Oberleitung nach mindestens einem der Ansprüche 1 bis 14, **dadurch gekennzeichnet, dass** der Grundrahmen nach oben hin mit mindestens vier Stützvorrichtungen zum Aufnehmen der Kräfte bei Stapelung ausgerüstet ist.

## Claims

1. A device for exchanging a contact wire that is mounted on a carrier cable on an overhead line of a track by means of droppers, comprising at least one unit for guiding and receiving the contact wire to be removed and at least one unit for guiding and receiving the contact wire to be installed which is arranged axially symmetrical to the former unit referred to the working direction and leads the guiding and receiving unit of the contact wire to be removed,
**characterized in that**
at least one contact wire guiding device (12) with an assigned contact wire position checker (27) respectively acquires the actual contact wire position and transfers the old contact wire from its actual position onto the storage drum as well as transfers the new contact wire from the storage drum into an end position that is identical to the actual position of the old contact wire,
wherein the leading contact wire position checker (27 A) referred to the working direction metrologically acquires the actual position of the incoming contact wire and a central control unit (7) determines therefrom control signals for a synchronous tracking of the leading contact wire guiding device (12 A) referred to the working direction that is connected to this contact wire position checker (27 A) in all three space coordinates,
and wherein a measuring device on a lower deflection pulley (31) of the contact wire guiding device (12) acquires the actual deviation of the contact wire being unwound from the storage drum (14) and the contact wire being wound onto the storage drum from the direction extending perpendicular to the storage drum axis (15) and the central control unit (7) determines therefrom signals for a displacement of the drum winch frame (13) transverse to the track axis (5).

2. The device for exchanging a contact wire on an overhead line according to Claim 1, **characterized in that** both units for guiding and receiving the contact wire to be removed and the contact wire to be installed are respectively arranged on separate base frames (11) that can be detached from the carrier vehicle.

3. The device for exchanging a contact wire on an overhead line according to at least one of Claims 1 or 2, **characterized in that** each unit comprises at least one storage drum receptacle that is respectively provided with a separate drum winch drive and drum winch brake (16).

4. The device for exchanging a contact wire on an overhead line according to at least one of Claims 1-3, **characterized in that** a measuring device on the lower and/or upper deflection pulleys (28, 31) acquires the actual tensile stress of the incoming and the outgoing contact wire and forwards the measuring values to a central control unit (7) for the respective control of the corresponding drum drives and drum brakes (16).

5. The device for exchanging a contact wire on an overhead line according to at least one of Claims 1-4, **characterized in that** the central control unit (7) controls the contact wire guiding device (12 B) that is connected to the trailing guiding wire position checker (27 B) referred to the working direction in all three space coordinates, namely such that its position is identical to the position previously assumed at this location by the leading guiding element.

6. The device for exchanging a contact wire on an overhead line according to at least one of Claims 1-5, **characterized in that** the contact wire position checker (27) and the upper deflection pulley (28) are offset relative to one another along the axis of rotation of the upper deflection pulley (28).

7. The device for exchanging a contact wire on an overhead line according to at least one of Claims 1-6, **characterized in that** the storage drums (14) have a core, the shape of which slightly resembles a truncated cone.

8. The device for exchanging a contact wire on an overhead line according to at least one of Claims 1-7, **characterized in that** the storage drums (14) have side walls (18) that are detachably connected to the storage drum core.

9. The device for exchanging a contact wire on an overhead line according to at least one of Claims 1-8, **characterized in that** the contact wire guiding device (12) and the drum winch frame (13) are mechanically separated from one another and can be displaced relative to one another in a horizontal plane transverse to the working direction of the device.

10. The device for exchanging a contact wire on an overhead line according to at least one of Claims 1-9, **characterized in that** a driven auxiliary cable winch (34) is respectively assigned to the drum winch frames (13).

11. The device for exchanging a contact wire on an overhead line according to at least one of Claims 1-10, **characterized in that** a height-adjustable working frame (6) for disengaging and engaging the contact wires from/with the dropper clamps is arranged such that its working platform is positioned centrally between the two contact wire guiding devices (12) referred to the working direction in its working position.

12. The device for exchanging a contact wire on an overhead line according to Claim 11, **characterized in that** all drives of the working frame (6) can be controlled via a mobile control unit.

13. The device for exchanging a contact wire on an overhead line according to at least one of Claims 1-12, **characterized in that** a device for detecting the clamping points is respectively installed in their leading region referred to the working direction.

14. The device for exchanging a contact wire on an overhead line according to at least one of Claims 1-13, **characterized in that** the contact wire guiding device (12) be placed on the device with its axis of rotation extending transverse to the longitudinal axis of the machine when the device is not in use.

15. The device for exchanging a contact wire on an overhead line according to at least one of Claims 1-14, **characterized in that** the upper region of the base frame is equipped with at least four supporting devices for taking up the forces that result from stacking.

## Revendications

1. Dispositif d'échange d'un fil aérien fixé à un câble porteur sur une caténaire d'une voie, comportant au moins une unité de guidage et réception du fil aérien à démonter ainsi qu'au moins une unité disposée symétriquement en axe par rapport à celle-ci dans le sens de marche pour le guidage et la réception du fil aérien à poser et qui précède l'unité de guidage et de réception du fil aérien à démonter dans le sens de marche,
**caractérisé en ce que**
respectivement au moins un dispositif de guidage de fil aérien (12) enregistre à l'aide d'un contrôleur de position du fil aérien associé (27) la position réelle du fil aérien et transfère l'ancien fil aérien depuis sa position réelle vers le tambour de stockage ou transfère le nouveau fil aérien depuis le tambour de stockage vers une position finale identique à la position réelle de l'ancien fil aérien,
tandis que le contrôleur de position de fil aérien (27A) situé en avant dans le sens de marche enregistre la position réelle du fil aérien rentrant par technique de mesure et qu'une unité de commande centrale (7) détermine à partir de là des signaux de commande pour reconduire de manière synchrone le dispositif de guidage de fil aérien (12 A) situé en avant dans le sens de marche et relié à ce contrôleur de position de fil aérien (27 A) vers les trois coordonnées spatiales,
et qu'un dispositif de mesure placé sur un rouleau d'inversion inférieur (31) du dispositif de guidage de fil aérien (12) enregistre la déviation momentanée du fil aérien partant du tambour de stockage (14) ou arrivant sur le tambour de stockage par rapport au sens s'étendant orthogonalement par rapport à l'axe du tambour de stockage (15) et que l'unité de commande centrale (7) détermine à partir de là des signaux pour un décalage transversal à l'axe de la voie (5) du chevalet à treuil du tambour (13).

2. Dispositif d'échange d'un fil aérien sur une caténaire selon la revendication 1, **caractérisé en ce que** les deux unités de guidage et réception du fil aérien à démonter ou à poser sont montées sur des châssis de base (11) respectivement séparés et détachables du véhicule porteur.

3. Dispositif d'échange d'un fil aérien sur une caténaire selon au moins une des revendications 1 ou 2, **caractérisé en ce que** chaque unité comporte au moins un support de tambour de stockage avec respectivement une propulsion et un frein de treuil de tambour (16).

4. Dispositif d'échange d'un fil aérien sur une caténaire selon au moins une des revendications 1 ou 3, **caractérisé en ce qu'**un dispositif de mesure enregistre sur les rouleaux d'inversion inférieurs et/ou supérieurs (28, 31) la tension de traction momentanée du fil aérien entrant ou sortant et transmet les valeurs de mesure pour la commande de la propulsion ou des freins de tambour (16) correspondants à un dispositif central de commande (7) .

5. Dispositif d'échange d'un fil aérien sur une caténaire selon au moins une des revendications 1 à 4, **caractérisé en ce que** l'unité de commande centrale (7) commande le dispositif de guidage de fil aérien (12 B) relié au contrôleur de position de fil aérien (27 B) situé derrière dans le sens de marche vers les trois coordonnées spatiales de manière à ce que sa position soit identique à la position prise précédemment par l'élément de guidage situé avant à cet endroit.

6. Dispositif d'échange d'un fil aérien sur une caténaire selon au moins une des revendications 1 à 5, **caractérisé en ce que** le contrôleur de position de fil aérien (27 B) et le rouleau d'inversion supérieur (28) présentent l'un par rapport à l'autre un décalage le long de l'axe de rotation du rouleau d'inversion supérieur (28).

7. Dispositif d'échange d'un fil aérien sur une caténaire selon au moins une des revendications 1 à 6, **caractérisé en ce que** les tambours de stockage (14) comportent un noyau de forme légèrement tronconique.

8. Dispositif d'échange d'un fil aérien sur une caténaire selon au moins une des revendications 1 à 7, **caractérisé en ce que** les tambours de stockage (14) comportent des parois latérales (18) qui sont reliées de manière détachable au noyau du tambour de stockage.

9. Dispositif d'échange d'un fil aérien sur une caténaire selon au moins une des revendications 1 à 8, **caractérisé en ce que** le dispositif de guidage de fil aérien (12) et le chevalet à treuil du tambour (13) sont séparés mécaniquement l'un de l'autre et peuvent être déplacés l'un par rapport à l'autre dans un plan horizontal transversalement au sens de marche du dispositif.

10. Dispositif d'échange d'un fil aérien sur une caténaire selon au moins une des revendications 1 à 9, **caractérisé en ce qu'**aux chevalets à treuil du tambour (13) est associé respectivement un treuil à câble auxiliaire motorisé (34).

11. Dispositif d'échange d'un fil aérien sur une caténaire selon au moins une des revendications 1 à 10, **caractérisé en ce qu'**un échafaudage de travail (6) réglable en hauteur servant à accrocher ou décrocher les fils aériens dans les suspentes est disposé de manière à ce que sa plate-forme de travail soit, en position de marche, disposée par rapport au sens de marche au centre entre les deux dispositifs de guidage de fil aérien (12).

12. Dispositif d'échange d'un fil aérien sur une caténaire selon la revendication 11, **caractérisé en ce que** toutes les transmissions de l'échafaudage de travail (6) sont contrôlables par un dispositif de commande mobile.

13. Dispositif d'échange d'un fil aérien sur une caténaire selon au moins une des revendications 1 à 12, **caractérisé en ce que** dans sa zone située en avant dans le sens de marche, respectivement un dispositif de détection des points de fixation est installé.

14. Dispositif d'échange d'un fil aérien sur une caténaire selon au moins une des revendications 1 à 12, **caractérisé en ce qu'**en dehors de sa mise en oeuvre fonctionnelle, le dispositif de guidage de fil aérien (12) doit être déposé au dessus d'un axe de rotation situé transversalement à l'axe longitudinal de la machine sur le dispositif.

15. Dispositif d'échange d'un fil aérien sur une caténaire selon au moins une des revendications 1 à 14, **caractérisé en ce que** le châssis de base est équipé vers le haut d'au moins quatre dispositifs de soutien destinés à absorber les forces lors d'un empilement.
